(19) Europäisches Patentamt
European Patent Office
Office européen des brevets

(11) **EP 4 019 204 A1**

(12) **EUROPEAN PATENT APPLICATION**
published in accordance with Art. 153(4) EPC

(43) Date of publication:
**29.06.2022 Bulletin 2022/26**

(21) Application number: **19948118.5**

(22) Date of filing: **30.09.2019**

(51) International Patent Classification (IPC):
**B25J 9/18** (2006.01)

(52) Cooperative Patent Classification (CPC):
**B25J 9/1664; G05B 2219/36087; G05B 2219/49087**

(86) International application number:
**PCT/CN2019/109586**

(87) International publication number:
**WO 2021/062694 (08.04.2021 Gazette 2021/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Ltd., China
Chaoyang District
Beijing 100102 (CN)**

(72) Inventors:
• **LIAO, Liang
Beijing 100073 (CN)**
• **LI, Yu Wen
Shanghai 201612 (CN)**
• **LIU, Ying
Jiangxi 343200 (CN)**

(74) Representative: **Isarpatent
Patent- und Rechtsanwälte Barth
Charles Hassa Peckmann & Partner mbB
Friedrichstrasse 31
80801 München (DE)**

(54) **METHOD, DEVICE AND SYSTEM FOR CONTROLLING ROBOT, STORAGE MEDIUM AND TERMINAL**

(57)     Provided are a method, a device (20) and a system (1) for controlling a robot (10), a storage medium and a terminal, the robot is provided with a tool (40), the tool (40) is carried by the robot (10) to move along a path, and the tool (40) has a predetermined position and a predetermined direction at a plurality of path points of the path, the method comprises: controlling the robot (10) according to a predetermined angle at a plurality of path points of the path; acquiring the position and the actual direction of the tool (40); according to the actual position and actual direction of the tool (40) at a plurality of path points, determining the actual motion parameters of the robot (10) at the path points; according to the actual motion parameters, determining an adjustment angle of each joint (102) that makes the actual position and actual direction of the tool (40) at a plurality of path points be consistent with a predetermined position and predetermined direction; and controlling the robot (10) to make the tool (40) move along the path according to the adjusted angle. The method can monitor and adjust the moving path of the robot (10) to make the motion of the robot (10) accurate.

Fig. 1

EP 4 019 204 A1

**Description**

**TECHNICAL FIELD**

The present invention relates to the field of robot control. In particular, the present invention relates to a method, a device and a system for controlling robots, a storage medium and a terminal.

**BACKGROUND OF THE INVENTION**

Industrial robots have good repeatability and can be used for repetitive high-volume production. In common scenarios where robots are used, the operator can move an industrial robot, set the robot to reach a specified work position, and then make the robot repeatedly travel along a path to complete a production task. However, the absolute accuracy of industrial robots is relatively low compared with CNC equipment, which can cause problems in low-volume machine applications that require high accuracy (for example, surveying, exploring and drilling, and precision assembling).

Teaching a robot is often time-consuming for low-volume applications and has the problem of having to reach the required accuracy, especially when the robot needs to precisely follow a path to complete a task.

Offline programming can significantly reduce the workload of robot teaching, but the generated robot paths are based on standardized CAD models and robot dimensions, and errors are not considered in absolute positioning. In other words, offline programming based on standardized models cannot solve the problems due to the low absolute correctness of industrial robots.

**BRIEF SUMMARY OF THE INVENTION**

The embodiments of the present application provide a method, a device and a system for controlling a robot, a storage medium and a terminal, so as to at least solve the problem of low absolute accuracy of the robots in the prior art.

According to one aspect of the embodiments of the present application, a method for controlling a robot is provided, wherein the robot is provided with a tool, which is carried by the robot to move along a path and has preset positions and preset directions at a plurality of points on the path. The method comprises: at a plurality of points on the path, controlling the robot based on a preset angle of each of a plurality of joints of the robot at a point on the path; obtaining actual positions and actual directions of the tool at the plurality of points on the path when the robot carries the tool based on the preset angles along the path; determining an actual movement parameter of the robot at a point on the path based on the actual positions and the actual directions of the tool at the plurality of points on the path; based on the actual movement parameter, determining an adjusted angle of each of the plurality of joints of the robot at each point on the path so that the actual positions and the actual directions of the tool are consistent with the preset positions and the preset directions at the plurality of points on the path; and controlling the robot based on the adjusted angles to move the tool along the path.

In this way, the robot carries the tool to move along the path according to the preset control mode. For errors due to the actual low precision of the robot during the process, the technical solution of the present application monitors the actual position and direction of the tool, and adjusts the angles of the robot's joints, so that the robot can carry the tool to accurately move along the path.

According to exemplary embodiments of the present application, the method further comprises: obtaining preset positions and preset directions of the tool at the plurality of points on the path; determining a preset movement parameter of the robot at each point on the path based on the preset position and the preset direction of the tool at each point on the path; and determining a preset angle of each of the plurality of joints of the robot at each point on the path based on the preset movement parameter.

In this way, the preset angles for controlling the joints of the robot based on a preset control mode are determined according to the travel path of the tool.

According to exemplary embodiments of the present application, a marker is provided on the tool, and the actual position and the actual direction of the tool are determined through measuring the marker using a dynamic tracking system.

In this way, it is possible to effectively measure the posture of the tool.

According to exemplary embodiments of the present application, determining the movement parameter of the robot comprises: obtaining a coordinate system of the dynamic tracking system, each of the plurality of joints of the robot and a base of the robot respectively; and determining the movement parameter of the robot based on an inverse movement algorithm according to the position and the direction of the tool and the relationship among the coordinate systems.

In this way, it is possible to calculate the corresponding movement parameters of the robot based on the posture of the tool.

According to exemplary embodiments of the present application, the path is a path that the tool travels during a processing operation.

In this way, it is possible to accurately implement processing operations of the tool.

According to another aspect of the embodiments of the present application, a device for controlling a robot is provided, wherein the robot is provided with a tool, which is carried by the robot to move along a path and has preset positions and preset directions at a plurality of points on the path. The device comprises: an initial control module, configured to, at a plurality of points on the path, control the robot based on a preset angle of each of a plurality of joints of the robot at a point on the path; a tracking module, configured to obtain actual positions and actual directions of the tool at the plurality of points on the path when the robot carries the tool based on the preset angles along the path; an actual movement parameter calculating module, configured to determine an actual movement parameter of the robot at a point on the path based on the actual positions and the actual directions of the tool at the plurality of points on the path; an adjusted angle calculating module, configured to, based on the actual movement parameter, determine an adjusted angle of each of the plurality of joints of the robot at each point on the path so that the actual positions and the actual directions of the tool are consistent with the preset positions and the preset directions at the plurality of points on the path; and an adjustment control module, configured to control the robot based on the adjusted angles to move the tool along the path.

In this way, the robot carries the tool to move along the path according to the preset control mode. For errors due to the actual low precision of the robot during the process, the technical solution of the present application monitors the actual position and direction of the tool, and adjusts the angles of the robot's joints, so that the robot can carry the tool to accurately move along the path.

According to exemplary embodiments of the present application, the device further comprises: a preset posture obtaining module, configured to obtain preset positions and preset directions of the tool at the plurality of points on the path; a preset movement parameter calculating module, configured to determine a preset movement parameter of the robot at each point on the path based on the preset position and the preset direction of the tool at each point on the path; and a preset angle calculating module, configured to determine a preset angle of each of the plurality of joints of the robot at each point on the path based on the preset movement parameter.

In this way, the preset angles for controlling the joints of the robot based on a preset control mode are determined according to the travel path of the tool.

According to exemplary embodiments of the present application, a marker is provided on the tool, and the actual position and the actual direction of the tool are determined through measuring the marker using a dynamic tracking system.

In this way, it is possible to effectively measure the posture of the tool.

According to exemplary embodiments of the present application, determining the movement parameter of the robot comprises: obtaining a coordinate system of the dynamic tracking system, each of the plurality of joints of the robot and a base of the robot respectively; and determining the movement parameter of the robot based on an inverse movement algorithm according to the position and the direction of the tool and the relationship among the coordinate systems.

In this way, it is possible to calculate the corresponding movement parameters of the robot based on the posture of the tool.

According to exemplary embodiments of the present application, the path is a path that the tool travels during a processing operation.

In this way, it is possible to accurately implement processing operations of the tool.

According to another aspect of the embodiments of the present application, a system for controlling a robot is also provided, wherein the robot is provided with a tool, which is carried by the robot to move along a path and has preset positions and preset directions at a plurality of points on the path. The system comprises: a dynamic tracking system, used to measure an actual position and an actual direction of the tool; and a device for controlling a robot, which comprises: an initial control module, configured to, at a plurality of points on the path, control the robot based on a preset angle of each of a plurality of joints of the robot at a point on the path; a tracking module, configured to obtain, from the dynamic tracking system, actual positions and actual directions of the tool at the plurality of points on the path when the robot carries the tool based on the preset angles along the path; an actual movement parameter calculating module, configured to determine an actual movement parameter of the robot at a point on the path based on the actual positions and the actual directions of the tool at the plurality of points on the path; an adjusted angle calculating module, configured to, based on the actual movement parameter, determine an adjusted angle of each of the plurality of joints of the robot at each point on the path so that the actual positions and the actual directions of the tool are consistent with the preset positions and the preset directions at the plurality of points on the path; and an adjustment control module, configured to control the robot based on the adjusted angles to move the tool along the path.

In this way, the robot carries the tool to move along the path according to the preset control mode. For errors due to the actual low precision of the robot during the process, the technical solution of the present application monitors the actual position and direction of the tool, and adjusts the angles of the robot's joints, so that the robot can carry the tool to accurately move along the path.

According to exemplary embodiments of the present application, the device further comprises: a preset posture obtaining module, configured to obtain preset positions and preset directions of the tool at the plurality of points on the path; a preset movement parameter calculating module, configured to determine a preset movement parameter of the robot at each point on the path based on the preset position and the preset direction of the tool at each point on the path; and a preset angle calculating module, configured to determine a preset angle of each of the plurality of joints of the robot at each point on the path based on the preset movement parameter.

In this way, the preset angles for controlling the joints of the robot based on a preset control mode are determined according to the travel path of the tool.

According to exemplary embodiments of the present application, a marker is provided on the tool, and the actual position and the actual direction of the tool are determined through measuring the marker using a dynamic tracking system.

In this way, it is possible to effectively measure the posture of the tool.

According to another aspect of the embodiments of the present application, a storage medium is also provided, which comprises a stored program, wherein the program, when running, controls a device where the storage medium is located to execute the method according to any of the above paragraphs.

According to another aspect of the embodiments of the present application, a processor is also provided, which is used to run a program, wherein the program, when running, executes the method according to any of the above paragraphs.

According to another aspect of the embodiments of the present application, a terminal is also provided, comprising: one or more processors, a memory, and one or more programs, wherein the one or more programs are stored in the memory and configured to be executed by the one or more processors to perform the method according to any of the above paragraphs.

In this way, the robot carries the tool to move along the path according to the preset control mode. For errors due to the actual low precision of the robot during the process, the technical solution of the present application monitors the actual position and direction of the tool, and adjusts the angles of the robot's joints, so that the robot can carry the tool to accurately move along the path.

In the embodiments of the present application, a technical solution is provided to control a robot to carry a tool to move along a path based on the angles of the joints of the robot calculated according to the predetermined path, with real-time dynamic tracking, to calculate adjusted angles of the robot's joints that can maintain the preset posture of the tool based on the actual posture of the tool, so as to control the robot with the adjusted joint angles, so that the robot can run in a more precise manner, in order to at least solve the technical problem of the low absolute accuracy of robots, and achieve the technical effect of improving the accuracy of robots when operating processing equipment.

## BRIEF DESCRIPTION OF THE DRAWINGS

The drawings described here are used to provide further understanding of the present application and constitute a part of the present application. The exemplary embodiments and their description of the application are used to explain the present application, and do not constitute an improper limitation to the present application. In the drawings:

Figure 1 is a schematic diagram of controlling a robot to perform an operation according to the embodiments of the present application;

Figure 2 is a block diagram of the system for controlling a robot according to the embodiments of the present application;

Figure 3 is a block diagram of the system for controlling a robot according to exemplary embodiments of the present application;

Figure 4 is a block diagram of the device for controlling a robot according to the embodiments of the present application;

Figure 5 is a block diagram of the device for controlling a robot according to exemplary embodiments of the present application;

Figure 6 is a flowchart of the method for controlling a robot according to the embodiments of the present application;

Figure 7 is a flowchart of the method for controlling a robot according to exemplary embodiments of the present application.

Reference numerals in the drawings:

1: system for controlling a robot;
10: robot;
102: joint;
104: base;
20: device for controlling a robot;
202: initial control module;
204: tracking module;
206: actual movement parameter calculating module;
208: adjusted angle calculating module;
210: adjustment control module;
212: preset posture obtaining module;
214: preset movement parameter calculating module;
216: preset angle calculating module;
30: dynamic tracking system;
40: tool;
42: marker;
S101 - S109: steps;
S201 - S205: steps.

## DETAILED DESCRIPTION OF THE EMBODIMENTS

For those skilled in the art to better understand the solution of the present invention, the following will clearly and completely describe the technical solution in the embodiments of the present application with reference to the drawings of the embodiments of the present application. Obviously, the described embodiments are only some of the embodiments of the present application, rather than all the embodiments. Based on the embodiments of the present application, all other embodiments obtained by those ordinarily skilled in the art without inventive work shall fall within the scope of the present application.

It should be noted that the terms "first", "second", etc. in the description and claims of the present application and the above drawings are used to distinguish similar objects, and are not necessarily used to describe a specific sequence or order. It is to be understood that the data so used are interchangeable under appropriate circumstances, so that the embodiments of the present application described herein can be implemented in sequences other than those illustrated or described herein. In addition, the terms "comprise" and "have" and any variations thereof are intended to cover non-exclusive inclusion. For example, a process, method, system, product or device comprising a series of steps or modules or units is not necessarily limited to the explicitly listed steps or modules or units, but may include other steps or modules or units not expressly listed or inherent to these processes, methods, products or devices.

In a scenario where a robot is applied, for example, in a scenario where a robot is used to carry a tool for machining, the tool is provided on the robot, wherein the robot is composed of, for example, a plurality of joints and an arm, and the movement of the joints of the robot can control the movement of the arm, thereby the robot can move with the tool.

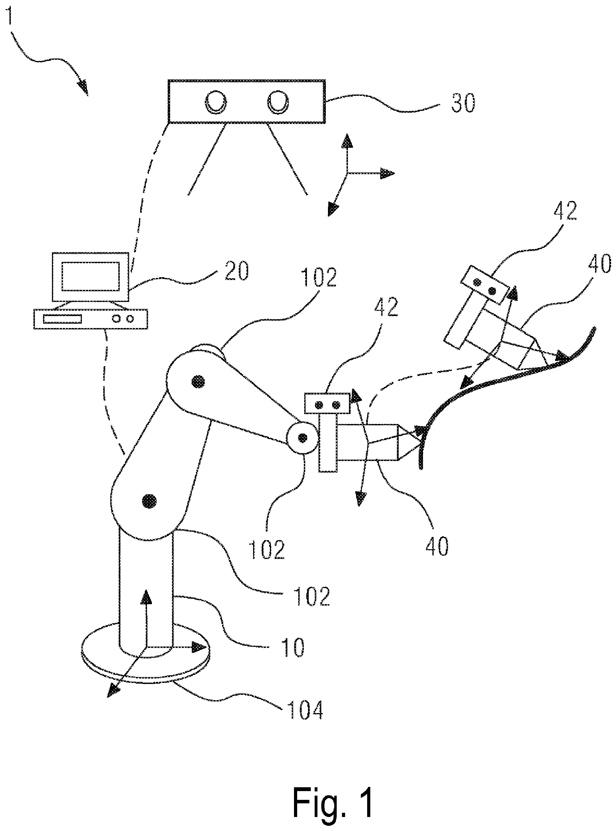

Figure 1 is a schematic diagram for controlling a robot to perform an operation according to the embodiments of the present application. In the embodiments of the present application, the scenario where a tool is used for the operation of chamfering is shown. In the operation of chamfering, the tool processes the workpiece along a predetermined path, thereby cutting the edge of the workpiece into a certain bevel. It should be understood that the embodiments of the present application only use the operation of "chamfering" as an example to illustrate the technical solution of the present application, and the technical solution of the present application is not limited to the operation of chamfering. As shown in Figure 1, the tool 40 moves along a path (shown as a solid curve), and has different positions and directions at different points on the path, to perform the operation of chamfering. In order to move the tool 40, the tool 40 is provided on a robot 10. Specifically, the robot 10 is arranged on a base 104, and the movement of the tool 40 is driven by the movement of a plurality of joints 102, so that the tool 40 moves along the path to perform the operation of chamfering.

In order to move the tool 40 along the path, the arm of the robot 10 should perform a series of movements to carry the tool 40 to move. After the path is determined, the angles of the plurality of joints 102 of the robot 10 at each point on the path are determined, the angles of the joints 102 of the robot change to drive the arm of the robot to move to keep the tool 40 on the path and perform chamfering in the correct direction. The movement of the robot 10 is controlled by the device 20 for controlling a robot.

In addition, a dynamic tracking system 30 is used to monitor the movement of the tool 40. The tool 40 is provided with a marker 42, and the dynamic tracking system 30 can monitor the movement of the tool 40 by monitoring the marker 42. The dynamic tracking system 30 sends the data obtained by the monitoring tool 40 to the device 20 for controlling the robot, and the device 20 for controlling the robot can adjust the movement of the robot 10 according to the data obtained from monitoring, so that the robot 10 can accurately carry the tool 40 to move along the path, thereby the chamfering operation can be completed with high precision.

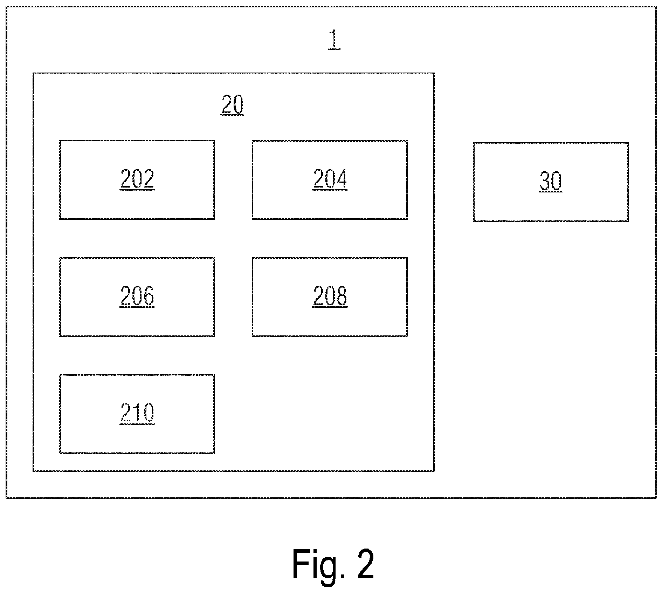

According to the embodiments of the present application, a system for controlling a robot is provided. As shown in Figure 1, a tool 40 is provided on the robot 10, the tool 40 is carried by the robot 10 to move along a path, and the tool 40 has preset positions and preset directions at a plurality of points on the path. Figure 2 is a block diagram of the system for controlling a robot according to the embodiments of the present application. As shown in Figure 2, the system 1 comprises: a device 20 for controlling a robot and a dynamic tracking system 30.

The dynamic tracking system 30 is used to measure the actual position and the actual direction of the tool 40. The device 20 for controlling a robot comprises: an initial control module 202, a tracking module 204, an actual movement parameter calculating module 206, an adjusted angle calculating module 208 and an adjustment control module 210.

The initial control module 202 is configured to control the robot 10 according to a preset angle of each of the plurality of joints 102 of the robot 10 at each of a plurality of points on a path. The tracking module 204 is configured to obtain, from the dynamic tracking system 30, the actual position and the actual direction of the tool 40 at the plurality of points on the path when the robot 10 carries the tool 40 along the path according to the preset angles. Due to the lack of absolute accuracy of the robot 10, the actual position and actual direction of the tool 40 at the plurality of points on the path may be different from the intended positions and the intended directions of the tool 40 along the path to complete the machining. The actual movement parameter calculating module 206 is configured to determine the actual movement parameters of the robot 10 at a point on the path based on the actual position and the actual direction of the tool 40 at the plurality of points on the path. The movement parameters include, for example, parameters representing the direction and orientation of each arm (or axis) of the robot in space. The adjusted angle calculating module 208 is configured to determine an adjusted angle of each of the plurality of joints 102 of the robot 10 at each point on the path based on the actual movement parameters so that the actual positions and the actual directions of the tool 40 are consistent with the preset positions and the preset directions at the plurality of points on the path. The adjustment control module 210 is configured to control the robot 10 to move the tool 40 along the path according to the adjusted angles.

When the robot 10 carries the tool 40 to move along the path according to a preset control mode, for example, when the robot 10 is controlled based on the angles of the joints 102 calculated according to the path, as the result of errors due to the low actual accuracy of the robot 10 during the traveling process, the arm (or axis) of the robot 10 does not reach the intended position, and the tool 40 does not reach the precise machining position at a preset point on the path and is not directed to the exact direction. In the technical solution of the present application, the actual position and direction of the tool 40 are monitored, and the angles of the joints 102 of the robot 10 are adjusted according to the actual position and direction of the tool 40, so that the robot 10 can carry the tool 40 to move along the path accurately.

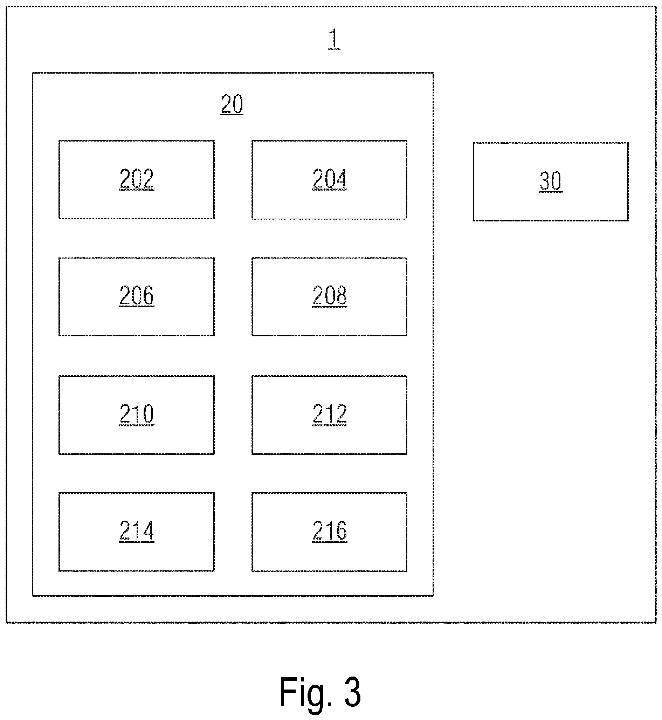

Figure 3 is a block diagram of the system for controlling a robot according to exemplary embodiments of the present application. According to exemplary embodiments of the present application, the device 20 in the system 1 further comprises: a preset posture obtaining module 212, a preset movement parameter calculating module 214 and a preset angle calculating module 216.

The preset posture obtaining module 212 is configured to obtain preset positions and preset directions of the tool 40 at a plurality of points on the path. The preset movement parameter calculating module 214 is configured to determine the preset movement parameters of the robot 10 at each point on the path based on the preset position and the preset direction of the tool 40 at each point on the path. The preset angle calculating module 216 is configured to determine the preset angle of each of the plurality of joints 102 of the robot 10 at each point on the path based on the preset movement parameters. In this way, the preset angles for controlling the joints 102 of the robot 10 based on a preset control mode are determined according to the travel path of the tool 40. The initial movement of the robot 10 can be controlled based on the preset angles of the joints 102.

According to exemplary embodiments of the present application, a marker is provided on the tool, and the actual position and the actual direction of the tool are determined through measuring the marker using a dynamic tracking system. As shown in Figure 1, the marker 42 is provided on the tool 40, and the dynamic tracking system 30 can capture an image of the marker 42 and measure the position and direction of the marker 42, to determine the position and direction of the tool 40. In this way, it is possible to effectively measure the posture of the tool 40.

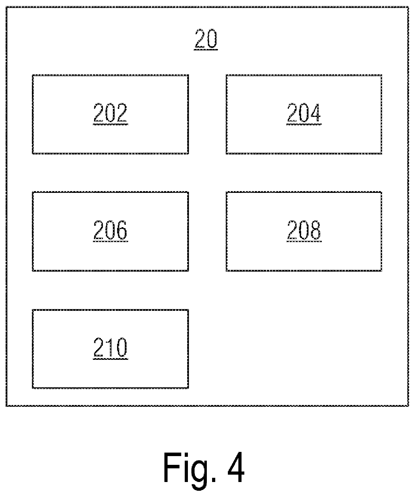

According to the embodiments of the present application, a device for controlling a robot is provided. Figure 4 is a block diagram of the device for controlling a robot according to the embodiments of the present application. As shown in Figure 4, the device 20 for controlling a robot comprises: an initial control module 202, a tracking module 204, an actual movement parameter calculating module 206, an adjusted angle calculating module 208 and an adjustment control module 210.

The initial control module 202 is configured to control the robot 10 according to a preset angle of each of the plurality of joints 102 of the robot 10 at each of a plurality of points on a path. The tracking module 204 is configured to obtain, from the dynamic tracking system 30, the actual position and the actual direction of the tool 40 at the plurality of points on the path when the robot 10 carries the tool 40 along the path according to the preset angles. Due to the lack of absolute accuracy of the robot 10, the actual position and actual direction of the tool 40 at the plurality of points on the path may be different from the intended positions and the intended directions of the tool 40 along the path to complete the machining. The actual movement parameter calculating module 206 is configured to determine the actual movement parameters of the robot 10 at a point on the path based on the actual position and the actual direction of the tool 40 at the plurality of points on the path. The movement parameters include, for example, parameters representing the direction and orientation of each arm (or axis) of the robot in space. The adjusted angle calculating module 208 is configured to determine an adjusted angle of each of the plurality of joints 102 of the robot 10 at each point on the path based on the actual movement parameters so that the actual positions and the actual directions of the tool 40 are consistent with the preset positions and the preset directions at the plurality of points on the path. The adjustment control module 210 is configured to control the robot 10 to move the tool 40 along the path according to the adjusted angles.

Those skilled in the art should understand that, although the embodiments of the present application show that the device 20 comprises a plurality of modules, these modules may be combined with each other to form an integrated functional module, or may be provided outside the device 20, as long as the functions of these modules can be implemented. For example, the initial control module 202 and the adjustment control module 210 may be implemented by a separate control module, and the actual movement parameter calculating module 206 and the adjusted angle calculating module 208 may also be implemented by a separate calculating module.

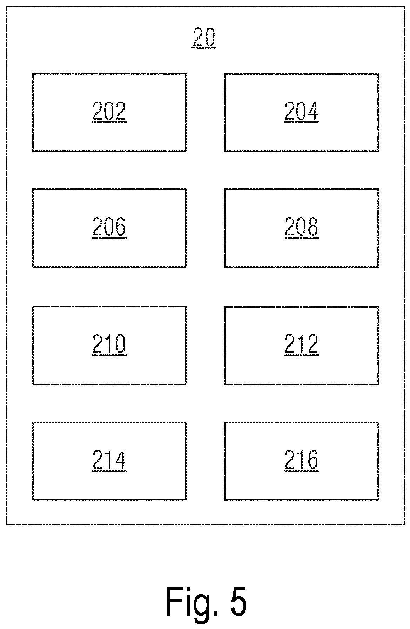

Figure 5 is a block diagram of the device for controlling a robot according to exemplary embodiments of the present application. According to exemplary embodiments of the present application, the device 20 further comprises: a preset posture obtaining module 212, a preset movement parameter calculating module 214 and a preset angle calculating module 216.

The preset posture obtaining module 212 is configured to obtain preset positions and preset directions of the tool 40 at a plurality of points on the path. The preset movement parameter calculating module 214 is configured to determine the preset movement parameters of the robot 10 at each point on the path based on the preset position and the preset direction of the tool 40 at each point on the path. The preset angle calculating module 216 is configured to determine the preset angle of each of the plurality of joints 102 of the robot 10 at each point on the path based on the preset movement parameters. In this way, the preset angles for controlling the joints 102 of the robot 10 based on a preset control mode are determined according to the travel path of the tool 40. The initial movement of the robot 10 can be controlled based on the preset angles of the joints 102.

It applies here as above that those skilled in the art should understand that, although the embodiments of the present application show that the device 20 comprises a plurality of modules, these modules may be combined with each other to form an integrated functional module, or may be provided outside the device 20, as long as the functions of these modules can be implemented.

According to exemplary embodiments of the present application, the device 20 can obtain a coordinate system of the dynamic tracking system 30, each of the plurality of joints 102 of the robot 10 and the base 104 of the robot 10 respectively, and determine the movement parameters of the robot 10 based on an inverse movement algorithm according to the position and the direction of the tool 40 and the relationship among the coordinate systems. In this way, it is possible to calculate the corresponding movement parameters of the robot based on the posture of the tool 40. For example, the device 20 can calculate the preset movement parameters of the robot 10 based on the preset position and the preset direction of the tool 40 when moving on the path. The device 20 can calculate the actual movement parameters of the robot 10 based on the actual position and the actual direction of the tool 40 when moving on the path.

According to exemplary embodiments of the present application, the path is a path that the tool 40 travels during a machining operation. For example, the tool 40 moves along the path to perform the operation of chamfering.

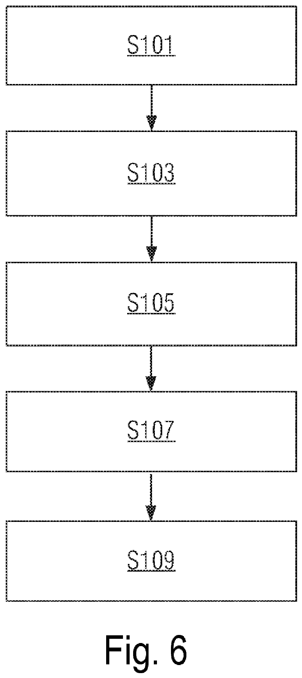

According to the embodiments of the present application, a method for controlling a robot is provided. Figure 6 is a flowchart of the method for controlling a robot according to the embodiments of the present application. As shown in Figure 6, the method for controlling a robot to move in the scenario shown in Figure 1 comprises: Step S101, controlling the robot according to a preset angle of each of a plurality of joints of the robot at each of a plurality of points on a path. Step S103, obtaining an actual position and an actual direction of the tool at the plurality of points on the path when the robot carries the tool along the path according to the preset angles. Step S105, determining an actual movement parameter of the robot at a point on the path based on the actual position and the actual direction of the tool at the plurality of points on the path. Step S107, determining an adjusted angle of each of the plurality of joints of the robot at each point on the path based on the actual movement parameters so that the actual positions and the actual directions of the tool are consistent with the preset positions and the preset directions at the plurality of points on the path. Step S109, controlling the robot to move the tool along the path according to the adjusted angles.

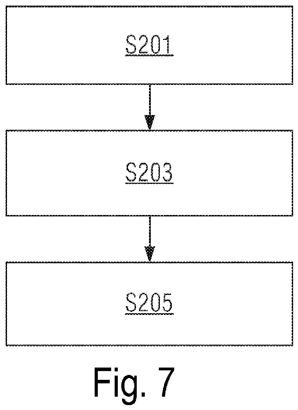

Figure 7 is a flowchart of the method for controlling a robot according to exemplary embodiments of the present application. According to exemplary embodiments of the present application, the method further comprises: Step S201, obtaining preset positions and preset directions of the tool at the plurality of points on the path. Step S203, determining a preset movement parameter of the robot at a point on the path based on the preset position and the preset direction of the tool at each point on the path. Step S205, determining a preset angle of each of the plurality of joints of the robot at each point on the path based on the preset movement parameter.

For example, in the scenario shown in Figure 1, in order for the tool 40 to accurately complete the chamfering operation, Step 1 is first performed to define the path for completing the chamfering operation. A local coordinate system is established for the tool 40, and then a preset position and a preset direction of the tool 40 (the posture of the tool 40) along a given path on the coordinate system can be determined. The preset position and the preset direction of the tool 40 may be represented by a homogeneous matrix T from the coordinate system of the tool 40 to the measurement coordinate system of the dynamic tracking system 30.

Next, Step 2 is performed to establish a formula for the preset position and the preset direction of the tool 40 mounted on the robot 10. A measurement coordinate system is established for the dynamic tracking system 30, a base coordinate system is established for the base 104 of the robot 10, a local coordinate system is established at each joint 102, and then the homogeneous matrix from the coordinate system of the tool 40 to the measurement coordinate system can be expressed as:

$$T_{MT} = T_{M0}T_{01}T_{12}T_{23}T_{34}T_{45}T_{56}T_{6T}.$$

In the formula, $T_{M0}$ is a homogeneous matrix from the base coordinate system to the measurement coordinate system, and $T_{6T}$ is a homogeneous matrix from the coordinate system of the tool 40 to the local coordinate system of the last joint 102 (in the direction to the end of the robot). The homogeneous matrix between two adjacent arms is an equation of the angle of the corresponding joint and the Denavit-Hartenberg kinematic parameter:

$$T_{i-1, i} = T_{i-1, i}(p_i, q_i).$$

In the equation, qi is the angle of the ith joint 102, i is an integer from 1 to 6, and the vector pi = [$\alpha_i$, $d_i$, $a_i$, $\ominus_i$] represents the Denavit-Hartenberg kinematic parameter of the ith joint 102.

Next, Step 3 is performed to obtain the preset angles of the joints 102 of the robot 10, so that the tool 40 moves along the path obtained in Step 1 according to the nominal value of the Denavit-Hartenberg kinematic parameter. The preset angles are obtained by solving the following equation of an inverse movement algorithm:

$$T_{0T} = T_{01}T_{12}T_{23}T_{34}T_{45}T_{56}T_{6T} \qquad (1).$$

In the equation, $T_{0T}$ is a homogeneous matrix from the coordinate system of the tool 40 to the base coordinate system, which can be determined from the path defined in Step 1. The nominal value of the Denavit-Hartenberg kinematic parameter $p_{ni}$ is used to calculate the matrix Ti-i, i, for example: $T_{i-1, i} = T_{i-1, i}(p_{ni}, q_i)$. Then, the angle qi of the joint is calculated by equation (1).

Then Step 4 is performed to control the robot to move along the path using the preset angles of the joints calculated in Step 3, and, along the path, the dynamic tracking system 30 is used to measure the actual positions and the actual directions of the tool 40 at the plurality of points on the path.

In Step 5, the dynamic tracking system 30 sends the actual positions and the actual directions of the tool 40 to the device 20 for controlling the robot. For example, the dynamic tracking system 30 sends the actual positions and the actual directions of the tool 40 to the tracking module 204 of the device 20 for controlling the robot.

Next, Step 6 is performed, where the device 20 for controlling the robot (the actual movement parameter calculating module 206) calculates the actual values of the movement parameters of the robot 10 based on the actual position and the actual direction of the tool 40. For this, the actual position and the actual direction of the tool 40 are measured at N points on the path. The actual position and the actual direction of the tool 40 are expressed as the homogeneous matrix $T_{MT, k}$, wherein k is an integer from 1 to N, and then the equation below can be established:

$$T_{MT, k} = T_{M0}T_{01}T_{12}T_{23}T_{34}T_{45}T_{56}T_{6T} \qquad (2).$$

In the equation, $T_{i-1, i}$ = Ti-i, $_i(p_{ai}, q_i)$, qi is the angle of a joint determined in Step 3, $p_{ai}$ is the actual value of a Denavit-Hartenberg kinematic parameter obtained from equation (2).

Next, Step 7 is performed, where the device 20 for controlling the robot (the adjusted angle calculating module 208) uses the actual values of the movement parameters obtained in Step 6 to calculate the adjusted angles of the joints 102 of the robot 10 to move the tool 40 along the path. For this, the angle qi of the joint is calculated by equation (1) using the actual values of the Denavit-Hartenberg kinematic parameter of the calculated $T_{i-1, i}$ (for example, $T_{i-1, i} = T_{i-1, i}(P_{ai}, q_i)$).

Then Step 8 is performed, where the device 20 for controlling the robot sends the angles of the joints obtained in Step 7 to the robot 10, and uses the angles of the joints to control the joints 102 to move the tool 40 along the path.

In the above method according to exemplary embodiments of the present application, the robot may be controlled firstly to carry the tool for a complete run along the path according to the preset angles of the joints, and then the adjusted angles of the joints may be calculated at a plurality of points on the entire path, or it is also possible to control the robot to carry the tool along a part of the path according to the preset angles of the joints, calculate the adjusted angles of the joints at the points on the part of the path, and adjust the angles of the joints when the robot moves on the entire path. As the robot moves along the path, the system for controlling the robot can continuously adjust the robot's movement by monitoring the posture of the tool to improve the accuracy of machining.

In addition, according to another aspect of the embodiments of the present application, a storage medium is also provided, which comprises a stored program, wherein the program, when running, controls a device where the storage medium is located to execute the method according to any of the above paragraphs. According to another aspect of the embodiments of the present application, a processor is also provided, which is used to run a program, wherein the program, when running, executes the method according to any of the above paragraphs. According to another aspect of the embodiments of the present application, a terminal is also provided, comprising: one or more processors, a memory, and one or more programs, wherein the one or more programs are stored in the memory and configured to be executed by the one or more processors to perform the method according to any of the above paragraphs.

With the technical solution of the present application, the production cost can be reduced, the flexibility can be improved, and it is easy for users to use robots. The dynamic tracking system of the present application is relatively inexpensive, and the marker on the tool has better visibility than laser trackers. The technical solution of the present application does not require the user to update the movement parameters on the robot controller. Compared with directly updating the movement parameters on the robot controller, the technical solution of the present application utilizes a separate controller, uses the actual movement parameters to recalculate the angles of the joints, and then uses the recalculated angles of the joints to control the robot to complete the operation. Once the actual movement parameters are obtained, the values of these parameters can be used for other production tasks as long as the tool does not change.

In the above embodiments of the present application, the description of each embodiment is focused on some particulars. For parts that are not described in detail in a certain embodiment, reference may be made to the relevant descriptions of other embodiments.

In the several embodiments provided in the present application, it should be understood that the disclosed technical content may be implemented in other manners. Specifically, the device embodiments described above are only illustrative. For example, the division of the units or modules is only a logical functional division, and there may be other division methods in actual implementation, for example, with multiple units or modules or components combined or integrated into another system, or with some features omitted, or not implemented. In addition, the coupling or direct coupling or communication connection shown or discussed may be implemented through indirect coupling or communication connection of some interfaces, modules or units, which may be electrical or in other forms.

The units or modules described as separate components may or may not be physically separated, and the components displayed as units or modules may or may not be physical units or modules, i.e., they may be located in one place, or distributed to a plurality of network units or modules. Some or all of the units or modules may be selected depending on actual needs to achieve the purpose of the solution of this embodiment.

In addition, the functional units or modules in each embodiment of the present application may be integrated into one processing unit or module, or each unit or module may exist physically alone, or two or more units or modules may be integrated into one unit or module. The above-mentioned integrated units or modules may be implemented in the form of hardware, or may be implemented in the form of functional units or modules of software.

If an integrated unit is implemented in the form of a functional unit of software and sold or used as an independent product, it may be stored in a computer-readable storage medium. Based on this understanding, the technical solution of the present application in essence, or the part that contributes to the prior art, or all or part of the technical solution may be embodied in the form of a software product, and the computer software product is stored in a storage medium, including several instructions to cause a computer device (which may be a personal computer, a server, a network device, etc.) to execute all or part of the steps of the method described in the various embodiments of the present application. The aforementioned storage media may be: a USB flash disk, a read-only memory (ROM), a random access memory (RAM), a mobile hard disk drive, a magnetic disk or optical disk, or another medium that can store program codes.

The above are only the preferred embodiments of the present application. It should be pointed out that those skilled in the art may make several improvements and modifications without departing from the principles of the present application. These improvements and modifications shall be regarded as within the scope of the present application.

**Claims**

**1.** A method for controlling a robot (10), **characterized in that** a tool (40) is provided on the robot (10), the tool (40) is carried by the robot (10) to move along a path, and the tool (40) has preset positions and preset directions at a plurality of points on the path, and the method comprises:

at a plurality of points on the path, controlling the robot (10) according to a preset angle of each joint (102) of a plurality of joints (102) of the robot (10) at a point on the path;

obtaining an actual position and an actual direction of the tool (40) at the plurality of points on the path when the robot (10) carries the tool (40) along the path according to the preset angles;

determining an actual movement parameter of the robot (10) at a point on the path based on the actual positions and the actual directions of the tool (40) at the plurality of points on the path;

determining an adjusted angle of each joint (102) of the plurality of joints (102) of the robot (10) at each point on the path based on the actual movement parameter so that the actual positions and the actual directions of the tool (40) are consistent with the preset positions and the preset directions at the plurality of points on the path; and

controlling the robot (10) to move the tool (40) along the path according to the adjusted angles.

**2.** The method as claimed in claim 1, **characterized in that** the method further comprises:

obtaining preset positions and preset directions of the tool (40) at the plurality of points on the path;

determining the preset movement parameter of the robot (10) at each point on the path based on the preset position and the preset direction of the tool (40) at each point on the path; and

determining a preset angle of each joint (102) of the plurality of joints (102) of the robot (10) at each point on the path based on the preset movement parameter.

**3.** The method as claimed in claim 1 or 2, **characterized in that** a marker (42) is provided on the tool (40), and the actual position and the actual direction of the tool (40) are determined through measuring the marker (42) using a dynamic tracking system (30).

**4.** The method as claimed in claim 3, **characterized in that** determining a movement parameter of the robot (10) comprises:

obtaining a coordinate system of the dynamic tracking system (30), each joint (102) of the plurality of joints (102) of the robot (10), and a base (104) of the robot (10) respectively; and

determining a movement parameter of the robot (10) based on an inverse movement algorithm according to the position and the direction of the tool (40) and the relationship among the coordinate systems.

**5.** The method as claimed in claim 1 or 2, **characterized in that** the path is a path that the tool (40) travels during a processing operation.

**6.** A device (20) for controlling a robot (10), **characterized in that** a tool (40) is provided on the robot (10), the tool (40) is carried by the robot (10) to move along a path, and the tool (40) has preset positions and preset directions at a plurality of points on the path, and the device (20) comprises:

an initial control module (202), configured to control the robot (10) according to a preset angle of each joint (102) of a plurality of joints (102) of the robot (10) at each of a plurality of points on a path;

a tracking module (204), configured to obtain an actual position and an actual direction of the tool (40) at the plurality of points on the path when the robot (10) carries the tool (40) along the path according to the preset angles;

an actual movement parameter calculating module (206), configured to determine an actual movement parameter of the robot (10) at a point on the path based on the actual position and the actual direction of the tool (40) at the plurality of points on the path;

an adjusted angle calculating module (208), configured to determine an adjusted angle of each joint (102) of the plurality of joints (102) of the robot (10) at each point on the path based on the actual movement parameter so that the actual positions and the actual directions of the tool (40) are consistent with the preset positions and the preset directions at the plurality of points on the path; and

an adjustment control module (210), configured to control the robot (10) to move the tool (40) along the path according to the adjusted angles.

**7.** The device (20) as claimed in claim 6, **characterized in that** the device (20) further comprises:

a preset posture obtaining module (212), configured to obtain preset positions and preset directions of the tool (40) at the plurality of points on the path;
a preset movement parameter calculating module (214), configured to determine a preset movement parameter of the robot (10) at each point on the path based on the preset position and the preset direction of the tool (40) at each point on the path; and
a preset angle calculating module (216), configured to determine the preset angle of each joint (102) of the plurality of joints (102) of the robot (10) at each point on the path based on the preset movement parameter.

**8.** The device (20) as claimed in claim 6 or 7, **characterized in that** a marker (42) is provided on the tool (40), and the actual position and the actual direction of the tool (40) are determined through measuring the marker (42) using a dynamic tracking system (30).

**9.** The device (20) as claimed in claim 8, **characterized in that** determining a movement parameter of the robot (10) comprises:

obtaining a coordinate system of the dynamic tracking system (30), each joint (102) of the plurality of joints (102) of the robot (10), and a base (104) of the robot (10) respectively; and
determining a movement parameter of the robot (10) based on an inverse movement algorithm according to the position and the direction of the tool (40) and the relationship among the coordinate systems.

**10.** The device (20) as claimed in claim 6 or 7, **characterized in that** the path is a path that the tool (40) travels during a processing operation.

**11.** A system (1) for controlling a robot, **characterized in that** a tool (40) is provided on the robot (10), the tool (40) is carried by the robot (10) to move along a path, and the tool (40) has preset positions and preset directions at a plurality of points on the path, and the system (1) comprises:

a dynamic tracking system (30), used to measure an actual position and an actual direction of the tool (40); and
a device (20) for controlling a robot, wherein the device (20) comprises:

an initial control module (202), configured to control the robot (10) according to a preset angle of each joint (102) of a plurality of joints (102) of the robot (10) at each of a plurality of points on a path;
a tracking module (204), configured to obtain, from the dynamic tracking system (30), an actual position and an actual direction of the tool (40) at the plurality of points on the path when the robot (10) carries the tool (40) along the path according to the preset angles;
an actual movement parameter calculating module (206), configured to determine an actual movement parameter of the robot (10) at a point on the path based on the actual position and the actual direction of the tool (40) at the plurality of points on the path;
an adjusted angle calculating module (208), configured to determine an adjusted angle of each joint (102) of the plurality of joints (102) of the robot (10) at each point on the path based on the actual movement parameter so that the actual positions and the actual directions of the tool (40) are consistent with the preset positions and the preset directions at the plurality of points on the path; and
an adjustment control module (210), configured to control the robot (10) to move the tool (40) along the path according to the adjusted angles.

**12.** The system (1) as claimed in claim 11, **characterized in that** the device (20) further comprises:

a preset posture obtaining module (212), configured to obtain preset positions and preset directions of the tool (40) at the plurality of points on the path;
a preset movement parameter calculating module (214), configured to determine a preset movement parameter of the robot (10) at each point on the path based on the preset position and the preset direction of the tool (40) at each point on the path; and
a preset angle calculating module (216), configured to determine the preset angle of each joint (102) of the plurality of joints (102) of the robot (10) at each point on the path based on the preset movement parameter.

**13.** The system (1) as claimed in claim 11 or 12, **characterized in that** a marker (42) is provided on the tool (40), and the actual position and the actual direction of the tool (40) are determined through measuring the marker (42) using the dynamic tracking system (30).

**14.** A storage medium, **characterized in that** the storage medium comprises a stored program, wherein the program, when running, controls a device where the storage medium is located to execute the method as claimed in any of claims 1 to 5.

**15.** A processor, **characterized in that** the processor is used to run a program, wherein the program, when running, executes the method as claimed in any of claims 1 to 5.

**16.** A terminal, comprising: one or more processors, a memory, and one or more programs, wherein the one or more programs are stored in the memory, and are configured to be executed by the one or more processors to execute the method as claimed in any of claims 1 to 5.

Fig. 1

Fig. 2

1

20

| | |
|---|---|
| 202 | 204 |

30

| | |
|---|---|
| 206 | 208 |

| | |
|---|---|
| 210 | 212 |

| | |
|---|---|
| 214 | 216 |

Fig. 3

Fig. 4

Fig. 5

S101

S103

S105

S107

S109

Fig. 6

S201

S203

S205

Fig. 7

## INTERNATIONAL SEARCH REPORT

| International application No. |
| --- |
| **PCT/CN2019/109586** |

**A. CLASSIFICATION OF SUBJECT MATTER**

B25J 9/18(2006.01)i

According to International Patent Classification (IPC) or to both national classification and IPC

**B. FIELDS SEARCHED**

Minimum documentation searched (classification system followed by classification symbols)

B25J

Documentation searched other than minimum documentation to the extent that such documents are included in the fields searched

Electronic data base consulted during the international search (name of data base and, where practicable, search terms used)

CNPAT, WPI, EPODOC, CNKI, IEEE, GOOGLE: 机器人, 工具, 机械臂, 路径, 预定, 方向, 位置, 位姿, 角度, 关节, 实际, 调整, robot, device, arm, path, preset, direction, position, gesture, angle, joint, actually, adjust

**C. DOCUMENTS CONSIDERED TO BE RELEVANT**

| Category* | Citation of document, with indication, where appropriate, of the relevant passages | Relevant to claim No. |
| --- | --- | --- |
| A | CN 103418950 A (JIANGNAN UNIVERSITY et al.) 04 December 2013 (2013-12-04) description, paragraphs [0027]-[0028] | 1-16 |
| A | CN 104626152 A (SIASUN ROBOT & AUTOMATION CO., LTD.) 20 May 2015 (2015-05-20) entire document | 1-16 |
| A | CN 104965517 A (ZHANG, Yaolun) 07 October 2015 (2015-10-07) entire document | 1-16 |
| A | US 5532924 A (FANUC LTD.) 02 July 1996 (1996-07-02) entire document | 1-16 |
| A | JP 2009136994 A (HONDA MOTOR CO., LTD.) 25 June 2009 (2009-06-25) entire document | 1-16 |

☐ Further documents are listed in the continuation of Box C.   ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 June 2020** | **29 June 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

International application No.

**PCT/CN2019/109586**

| Patent document cited in search report | | | Publication date (day/month/year) | Patent family member(s) | | | Publication date (day/month/year) |
|---|---|---|---|---|---|---|---|
| CN | 103418950 | A | 04 December 2013 | None | | | |
| CN | 104626152 | A | 20 May 2015 | None | | | |
| CN | 104965517 | A | 07 October 2015 | None | | | |
| US | 5532924 | A | 02 July 1996 | JP | H06328385 | A | 29 November 1994 |
| | | | | WO | 9427791 | A1 | 08 December 1994 |
| JP | 2009136994 | A | 25 June 2009 | US | 2009148035 | A1 | 11 June 2009 |

Form PCT/ISA/210 (patent family annex) (January 2015)